(19) Europäisches Patentamt
European Patent Office
Office européen des brevets

(11) EP 2 543 755 B1

(12) # EUROPEAN PATENT SPECIFICATION

(45) Date of publication and mention of the grant of the patent:
**14.02.2018 Bulletin 2018/07**

(21) Application number: **11750571.9**

(22) Date of filing: **25.02.2011**

(51) Int Cl.:
*C08J 5/04* (2006.01)
*C08J 5/06* (2006.01)
*C08B 3/06* (2006.01)
*C08B 15/05* (2006.01)
*C08L 1/02* (2006.01)
*C08L 1/12* (2006.01)
*C08L 1/08* (2006.01)
*B82Y 40/00* (2011.01)

(86) International application number:
**PCT/JP2011/054325**

(87) International publication number:
**WO 2011/108461 (09.09.2011 Gazette 2011/36)**

(54) **CELLULOSE NANOFIBERS, METHOD FOR PRODUCING SAME, COMPOSITE RESIN COMPOSITION AND MOLDED BODY**

ZELLULOSE-NANOFASERN, VERFAHREN ZU IHRER HERSTELLUNG, VERBUNDHARZZUSAMMENSETZUNG UND FORMKÖRPER

NANOFIBRES DE CELLULOSE, LEUR PROCÉDÉ DE PRODUCTION, COMPOSITION DE RÉSINE COMPOSITE ET OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2010 JP 2010049565**

(43) Date of publication of application:
**09.01.2013 Bulletin 2013/02**

(73) Proprietor: **OLYMPUS CORPORATION**
**Hachioji-shi**
**Tokyo 192-8507 (JP)**

(72) Inventors:
- **SHIRAMIZU Kohei**
  **Tokyo 192-8507 (JP)**
- **SHIGA Naohito**
  **Tokyo 192-8507 (JP)**
- **MAGARA Takashi**
  **Tokyo 192-8507 (JP)**
- **OGUNI Kohei**
  **Tokyo 192-8507 (JP)**
- **LIN Lianzhen**
  **Kyoto-shi**
  **Kyoto 600-8813 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**WO-A1-2009/069641**
**JP-A- 2005 506 401**
**JP-A- 2009 144 262**
**JP-A- 2009 179 913**
**JP-A- 2009 203 467**
**US-B1- 6 703 497**

- **CAI TAO ET AL.: 'Structure and Properties of Cellulose Fibers from Ionic Liquids' JOURNAL OF APPLIED POLYMER SCIENCE vol. 115, no. 2, 15 January 2010, pages 1047 - 1053**
- **DATABASE WPI Week 201034 Thomson Scientific, London, GB; AN 2010-F09824 & JP 2010 104768 A (KANAI SHIN GIJUTSU KENKYUSHO KK) 13 May 2010 (2010-05-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to cellulose nanofibers, a method for producing the same, a composite resin composition, and a molded body.

### Background Art

Cellulose nanofibers have been used as a reinforcing material for polymeric composite materials in the related art. The cellulose nanofibers are generally obtained by mechanically shearing cellulose fibers such as pulp.

From WO 2009/069641 A1 there is known a cellulose nanofiber production method which includes an oxidation treatment step for oxidizing native cellulose in a neutral or acidic reaction solution containing an N-oxyl compound and an oxidizing agent that oxidizes aldehyde groups, and a dispersion step for dispersing the native cellulose in a medium following the oxidation treatment step. The method provides cellulose nanofibers according to the preamble of claim 1.

From JP 2009-179913 A there is known a cellulose nanofiber which is produced by swelling and fibrillating cellulose using a solvent containing an ionic liquid.

From JP 2009-144262 A it is known to chemically modify the surface of cellulose nanofibers by carrying out an acetal reaction.

For example, JP 2000-017592 A discloses fibrillar cellulose that is obtained by treating an aqueous cellulose pulp suspension with a high-pressure homogenizer.

In addition, JP 09-291102 A discloses acetyl cellulose ultrafine fibers that are obtained by acetylating ultrafine cellulose fibers produced from bacteria. The ultrafine cellulose fibers produced from bacteria have a mass-average polymerization degree of 1700 or higher. Accordingly, the ultrafine cellulose fibers produced from bacteria are excellent in terms of Young's modulus and tensile strength.

From US 6,703,497 B1 there are known cellulose microfibrils with modified surface, characterised in that the hydroxyl functions present at the surface of the microfibrils are etherified with at least an organic compound comprising at least a function capable of reacting with said hydroxyl functions, and the degree of surface substitution (DSs) is at least 0.05.

From JP 2010-104768 A, which is prior art under Art. 54(3) EPC, it is known a method for manufacturing high crystalline cellulose, in which a cellulose substance is dissolved in a solution containing an ionic liquid and the cellulose nanofibers obtained from treating the cellulose substance in the solution containing the ionic liquid are chemically modified by esterification or etherification to improve the hydrophobicity of the cellulose nanofibers. Cellulose nanofibers manufactured by the method described in this prior art are described to have a fiber diameter in a range between 4 nm and 500 nm and to have a fiber length in a range between 50 nm and 50 $\mu$m.

### Summary of Invention

Problem to be Solved by the Invention

However, in the method disclosed in JP 2000-017592 A, since a mechanical shearing force is applied to the fibers, the polymerization degree of the obtained microfiber-like cellulose becomes around 200. As a result, sufficient mechanical strength cannot be obtained.

Moreover, the cellulose fibers disclosed in JP 09-291102 A, which are produced from bacteria, include lots of I$\alpha$-type crystal components, so the reinforcing effect is weak.

The present invention has been made in consideration of the above situation, and an object thereof is to provide cellulose nanofibers having an excellent reinforcing effect, a method for producing the cellulose nanofibers, a composite resin composition containing the cellulose nanofibers, and a molded body obtained by molding the composite resin composition.

### Means for Solving the Problem

The object of the invention is attained by cellulose nanofibers according to claim 1, a composite resin composition comprising such cellulose nanofibers according to claim 3, a molded body obtained by molding such composite resin composition according to claim 5 and a method for producing such cellulose nanofibers according to claim 6. Further developments of the invention are specified in the dependent claims.

Effects of Invention

According to the present invention, it is possible to provide cellulose nanofibers having an excellent reinforcing effect, a method for producing the cellulose nanofibers, a composite resin composition containing the cellulose nanofibers, and a molded body obtained by molding the composite resin composition.

Brief Description of Drawings

FIG. 1 is a view illustrating results of X-ray diffraction analysis of the cellulose nanofibers of the present invention.

Description of Embodiments

The average polymerization degree of the cellulose nanofibers of the present invention is 600 to 30000. The average polymerization degree is preferably 600 to 5000, and more preferably 800 to 5000. If the average polymerization degree is 600 or higher, a sufficient reinforcing effect can be obtained.

The cellulose nanofibers in the related art are obtained by performing mechanical shearing such as homogenizing treatment on a raw material of cellulose fibers. Consequently, the cellulose nanofibers in the related art have a low polymerization degree, and a sufficient reinforcing effect cannot be obtained. Moreover, since the mechanical shearing seriously damages the raw material of cellulose fibers, the strength and the aspect ratio of the obtained cellulose nanofibers are low. According to the method for producing the cellulose nanofibers of the present invention that is described later, the raw material of cellulose fibers is not damaged. Accordingly, it is possible to easily obtain cellulose nanofibers having a polymerization degree of 600 or higher.

In order to obtain a sufficient reinforcing effect, the aspect ratio of the cellulose nanofibers of the present invention is 20 to 10000 and more preferably 20 to 2000. In the present specification and Claims, the "aspect ratio" refers to a ratio (average fiber length/average diameter) between an average fiber length and an average diameter of the cellulose nanofibers. As described above, according to the method for producing the cellulose nanofibers of the present invention, the raw material of cellulose fibers is not damaged. Therefore, it is possible to obtain cellulose nanofibers having a long average fiber length and an aspect ratio of 20 or more. Moreover, cellulose nanofibers having an aspect ratio of 10000 or less have a high moldability.

The average diameter of the cellulose nanofibers of the present invention is 1 nm to 800 nm, preferably 1 nm to 300 nm, and more preferably 1 nm to 100 nm. If cellulose nanofibers having an average diameter of 1 nm or more are produced, the production cost can be kept low. If cellulose nanofibers having an average diameter of 800 nm or less are produced, decrease in the aspect ratio can be inhibited. As a result, the cellulose nanofibers of the present invention can obtain a sufficient reinforcing effect with a low cost.

The cellulose nanofibers of the present invention have an I$\beta$-type crystal peak in an X-ray diffraction pattern. A cellulose type I is composite crystals of I$\alpha$-type crystals and I$\beta$-type crystals. Cellulose derived from higher plants such as cotton includes more I$\beta$-type crystals than I$\alpha$-type crystals. Bacterial cellulose includes more I$\alpha$-type crystals than I$\beta$-type crystals. Since the cellulose nanofibers of the present invention obtained using wood and the like, they mainly include the I$\beta$-type crystals.

Accordingly, the cellulose nanofibers of the present invention show a pattern unique to the I$\beta$-type crystals in an X-ray diffraction pattern as shown in FIG. 1.

Since the cellulose nanofibers of the present invention mainly include the I$\beta$-type crystals, the reinforcing effect thereof is superior to that of bacterial cellulose including lots of I$\alpha$-type crystals.

The cellulose nanofibers of the present invention are chemically modified so as to enhance its functionality. In order to use the cellulose nanofibers for a composite material, it is preferable to chemically modify hydroxyl groups on the surface of the cellulose nanofibers with a modification group so as to reduce the number of the hydroxyl groups. In this manner, the number of hydrogen bonds formed between the cellulose nanofibers is reduced, whereby strong adhesion between the cellulose nanofibers can be prevented. Consequently, the cellulose nanofibers are easily dispersed in a polymer material, whereby excellent interfacial bonds can be formed between the cellulose nanofibers and the polymer material. Due to the chemical modification, the cellulose nanofibers of the present invention have thermal resistance. Accordingly, if the chemically modified cellulose nanofibers of the present invention are mixed with other material, it is possible to impart thermal resistance to other material.

The proportion of hydroxyl groups chemically modified by a modification group with respect to total hydroxyl groups in the cellulose nanofibers is preferably 0.01% to 50%, and more preferably 10% to 20%.

The chemical modification simply needs to cause a reaction with a hydroxyl group. Etherification or esterification of the cellulose nanofibers is preferable since the chemical modification can be performed simply and efficiently.

As etherification agents, alkyl halides such as methyl chloride and ethyl chloride; dialkyl carbonate such as dimethyl carbonate and diethyl carbonate; dialkyl sulfate such as dimethyl sulfate and diethyl sulfate; alkylene oxides

such as ethylene oxide and propylene oxide; and the like are preferable. In addition, the etherification is not limited to alkyl etherification caused by the above etherification agents, and etherification caused by benzyl bromide, silyl etherification, and the like are also preferable. Examples of silyl etherification agents include alkoxysilanes such as n-butoxytrimethylsilane, tert-butoxytrimethylsilane, sec-butoxytrimethylsilane, isobutoxytrimethylsilane, ethoxytriethylsilane, octyldimethylethoxysilane, and cyclohexyloxytrimethylsilane; alkoxysiloxanes such as butoxypolydimethylsiloxane; and silazanes such as hexamethyldisilazane, tetramethyldisilazane, and diphenyltetramethyldisilazane. In addition, silyl halides such as trimethylsilyl chloride and diphenylbutyl chloride; and silyl trifluoromethane sulfonates such as t-butyldimethylsilyl trifluoromethane sulfonate can also be used.

Examples of esterification agents include a carboxylic acid that may have a hetero atom, a carboxylic anhydride, and a carboxylic halide. As the esterification agents, acetic acid, propionic acid, butyric acid, acrylic acid, methacrylic acid, and a derivative of these are preferable, and acetic acid, acetic anhydride, and butyric anhydride are more preferable.

Among the types of etherification and the esterification, alkyl etherification, alkyl silylation, and alkyl esterification are preferable since dispersibility in a resin is improved by these reactions.

The saturated absorptivity of the cellulose nanofibers of the present invention chemically modified described above is 300% by mass to 5000% by mass in an organic solvent having a solubility parameter (hereinbelow, referred to as an SP value) of 8 to 13. The cellulose nanofibers dispersed in the organic solvent having the above SP value have high affinity with a lipophilic resin and have a high reinforcing effect. Examples of organic solvents having an SP value of 8 to 13 include acetic acid, ethyl acetate, butyl acetate, isobutyl acetate, isopropyl acetate, methyl propyl ketone, methyl isopropyl ketone, xylene, toluene, benzene, ethyl benzene, dibutyl phthalate, acetone, isopropanol, acetonitrile, dimethyl formamide, ethanol, tetrahydrofuran, methyl ethyl ketone, cyclohexane, carbon tetrachloride, chloroform, methylene chloride, carbon disulfide, pyridine, n-hexanol, cyclohexanol, n-butanol, nitromethane, and the like.

As the organic solvent, water-insoluble solvents (solvents that do not mix with water at 25°C water at any ratio) such as xylene, toluene, benzene, ethylbenzene, dichloromethane, cyclohexane, carbon tetrachloride, methylene chloride, ethyl acetate, carbon disulfide, cyclohexanol, and nitromethane are more preferable. That is, the cellulose nanofibers of the present invention that are chemically modified as described above can be dispersed even in a water-insoluble solvent. Therefore, while cellulose nanofibers in the related art are not easily dispersed in a lipophilic resin, the cellulose nanofibers of the present invention that are chemically modified as described above can be easily dispersed in a lipophilic resin.

As the lipophilic resin, resins that dissolve poorly in water and are widely used as an industrial material required to have water resistance are preferable. The lipophilic resin may be either a thermoplastic resin or a thermosetting resin. Examples of the lipophilic resin particularly include a plant-derived resin, a resin formed of carbon dioxide as a raw material, an ABS resin, alkylene resins such as polyethylene and polypropylene, a styrene resin, a vinyl resin, an acrylic resin, an amide resin, an acetal resin, a carbonate resin, a urethane resin, an epoxy resin, an imide resin, a urea resin, a silicone resin, a phenol resin, a melamine resin, an ester resin, an acrylic resin, an amide resin, a fluoro resin, a styrol resin, an engineering plastic, and the like. As the engineering plastic, polyamide, polybutylene terephthalate, polycarbonate, polyacetal, modified polyphenylene oxide, modified polyphenylene ether, polyphenylene sulfide, polyether ether ketone, polyether sulfone, polysulfone, polyamide imide, polyether imide, polyimide, polyarylate, polyallyl ether nitrile, and the like are preferable. Among the above resins, two or more kinds of resins may be used as a mixture. In addition, among the above resins, polycarbonate is particularly preferable due to its strong impact strength.

As the polycarbonate, generally used polycarbonate can be used. For example, aromatic polycarbonate produced from a reaction between an aromatic dihydroxy compound and a carbonate precursor is preferable.

Examples of the aromatic dihydroxy compound include 2,2-bis(4-hydroxyphenyl)propane ("bisphenol A"), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)sulfide, bis(4-hydroxyphenyl)sulfone, bis(4-hydroxyphenyl)sulfoxide, bis(4-hydroxyphenyl)ether, bis(4-hydroxyphenyl)ketone, and the like.

Examples of the polycarbonate precursor include carbonyl halides, carbonyl esters, haloformates, and the like. The polycarbonate precursor is specifically phosgene, dihaloformate of, a divalent phenol, diphenyl carbonate, dimethyl carbonate, diethyl carbonate, and the like.

The polycarbonate may be polycarbonates excluding aromatic polycarbonate. Examples of the polycarbonates excluding aromatic polycarbonate include alicyclic polycarbonate, aliphatic polycarbonate, and the like. The polycarbonate resin may be linear or branched. The polycarbonate resin may also be a copolymer of a polymer, which is obtained by polymerizing the aromatic dihydroxy compound and the carbonate precursor, with another polymer.

The polycarbonate resin can be produced by a method known in the related art. Examples of methods known in the related art include various methods such as interfacial polymerization, melt transesterification, a pyridine method, and the like.

The type of the resin usable in the composite resin composition of the present invention includes a hydrophilic resin, in addition to the lipophilic resin described above. For example, unmodified cellulose nanofibers or cellulose nanofibers chemically modified with hydrophilic functional groups such as a sulfonic acid group, a carboxylic acid group,

or a salt of these disperse excellently in a hydrophilic resin and can be suitably used. Examples of the hydrophilic resin include polyvinyl alcohol, resins having undergone hydrophilication treatment, and the like. Among these, polyvinyl alcohol is particularly preferable since this resin is inexpensive and the cellulose nanofibers disperse excellently in this resin.

Additives such as a filler, a flame retarding aid, a flame retardant, an antioxidant, a release agent, a colorant, and a dispersant may be further added to the composite resin composition of the present invention.

As the filler, carbon fibers, glass fibers, clay, titanium oxide, silica, talc, calcium carbonate, potassium titanate, mica, montmorillonite, barium sulfate, a balloon filler, a beads filler, carbon nanotubes, and the like are usable.

As the flame retardant, a halogen-based flame retardant, a nitrogen-based flame retardant, metal hydroxide, phosphorus-based flame retardant, an organic alkali metal salt, an organic alkaline earth metal salt, a silicone-based flame retardant, expandable graphite, and the like are usable.

As the flame retarding aid, polyfluoroolefin, antimony oxide, and the like are usable.

As the antioxidant, a phosphorus-based antioxidant, a phenol-based antioxidant, and the like are usable.

As the release agent, a higher alcohol, carboxylic acid ester, polyolefin wax, polyalkylene glycol, and the like are usable.

As the colorant, any colorants such as carbon black and phthalocyanine blue are usable.

As the dispersant, for example, surfactants such as anionic surfactants, cationic surfactants, nonionic surfactants, and amphoteric surfactants and polymeric dispersants are usable, and the surfactant and the polymeric dispersant can be used concurrently, as long as the dispersant enables the cellulose nanofibers to be dispersed in the resin.

Since the cellulose nanofibers of the present invention disperse excellently in the resin, the composite resin composition of the present invention that contains the cellulose nanofibers has excellent transparency. For the composite resin composition having a thickness of 20 μm that contains 2% by mass of the cellulose nanofibers, an average light transmittance at 400 nm to 700 nm is preferably 60% or more, more preferably 70% or more, and particularly preferably 80% or more. When the average light transmittance is 60% or more, transparency is maintained, so the composite resin composition can be suitably used for usage requiring transparency.

Furthermore, the composite resin composition containing the chemically modified cellulose nanofibers can realize the decrease in a water absorbency and the improvement of thermal resistance without decreasing the light transmittance.

At this time, when other additives are contained in the composite resin composition of the present invention, it is preferable to select additives that do not easily lower transparency.

The molded body of the present invention is obtained by molding the composite resin composition. Since the molded body of the present invention also contains the cellulose nanofibers, the molded body has excellent strength and thermal resistance. Though not particularly limited, the molded body is used for medical instruments, audio equipment, and the like. Particularly, the molded body is suitably used as a molded body for a camera and a mirror frame that require strength.

In the method for producing the cellulose nanofibers of the present invention, a cellulose raw material is defibrated in a solution containing an ionic liquid, whereby the cellulose nanofibers are produced. Further the produced cellulose nanofibers are chemically modified.

The cellulose raw material is not particularly limited. Examples of the cellulose raw material include raw materials of natural cellulose such as cotton and hemp; pulp obtained by chemically treating wood, such as kraft pulp and sulfide pulp; semi-chemical pulp; used paper or recycled pulp thereof; and the like. Particularly, the pulp obtained by chemically treating wood is preferable in view of the cost, quality, and influence on the environment.

The shape of the cellulose raw material is not particularly limited. However, in view of easiness of treatment and accelerating solvent permeation, the cellulose raw material is preferably used after being appropriately pulverized.

The solution (hereinbelow, referred to as a treatment solution) containing the ionic liquid is a solvent that contains an ionic liquid represented by the following chemical formula and an organic solvent.

[Chem. 1]

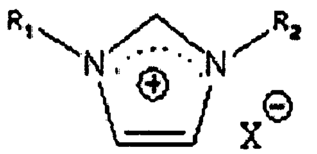

[In the formula, $R_1$ represents an alkyl group having 1 to 4 carbon atoms, $R_2$ represents an alkyl group having

1 to 4 carbon atoms or an allyl group, and $X^-$ represents halogen, pseudo-halogen, carboxylate having 1 to 4 carbon atoms, or thiocynate.]

Examples of the ionic liquid include 1-butyl-3-methylimidazolium chloride, 1-butyl-3-methylimidazolium bromide, 1-allyl-3-methylimidazolium chloride, 1-allyl-3-methylimidazolium bromide, and 1-propyl-3-methylimidazolium bromide.

It is also possible to defibrate the fiber raw material by using only the ionic liquid. However, when even fine fibers are likely to be dissolved due to excessively high solubility, it is preferable to add an organic solvent to the ionic liquid for use.

The type of organic solvent to be added may be appropriately selected in consideration of compatibility with the ionic liquid, affinity with cellulose or a chitin material, solubility of a mixed solvent, viscosity, and the like. Particularly, it is preferable to use any one or more organic solvents from among N,N-dimethylacetamide, N,N-dimethylformamide, 1-methyl-2-pyrrolidone, dimethylsulfoxide, acetonitrile, methanol, and ethanol. If these organic solvents are used concurrently, permeation of the ionic liquid into fine cellulose fibers is promoted, whereby destruction of the crystal structure of the fine fibers caused by the ionic liquid can be prevented.

The amount of the ionic liquid contained in the treatment solution may be appropriately adjusted since the amount depends on the type of the cellulose raw material, the ionic liquid, and the organic solvent. The amount of the ionic liquid contained in the treatment solution is preferably 20% by mass or more in view of swelling and solubility, and when an organic solvent having high solubility is used, the amount is more preferably 30% by mass or more. When an organic solvent having low solubility such as methanol is used, the amount is particularly preferably 50% by mass or more.

The amount of the cellulose raw material added preferably ranges from 0.5% by mass to 30% by mass based on the treatment solution. In view of economic efficiency, the amount of the cellulose raw material added is 0.5% by mass or more, and more preferably 1% by mass or more, based on the treatment solution. On the other hand, in view of uniformity of the defibration degree, the amount of the cellulose raw material added is preferably 30% or less, and more preferably 20%, based on the treatment solution.

As a treatment temperature, an appropriate temperature at which the cellulose raw material swells, and a bound substance between fine fibers softens and dissolves may be selected. The treatment temperature is preferably 20°C to 120°C in general.

If the treatment temperature is 20°C or higher, the defibration effect is not diminished, in view of the treatment rate and the viscosity of the treatment solution. If the treatment temperature is 120°C or lower, the bound substance between the fine fibers does not excessively soften and dissolve. Accordingly, when the treatment temperature is 20°C to 120°C, a yield of the cellulose nanofibers can be maintained.

In the method for producing the cellulose nanofibers of the present invention, after the defibration treatment performed in the treatment solution, chemical modification is performed. As the chemical modification, the etherification, esterification, and silylation described above are preferable.

According to the method for producing the cellulose nanofibers of the present invention, fibers are not damaged. Accordingly, it is possible to obtain cellulose nanofibers having a polymerization degree of 600 or higher that do not exist in the related art.

[Examples]

Hereinbelow, the present invention will be described in more detail based on examples and comparative examples. But, the present invention is not limited to the following examples.

(Example 1)

2 g of filter paper cut with a pair of scissors to have 3 mm sides was put in a 200 ml flask, and then 50 ml of N,N-dimethylacetamide and 60 g of an ionic liquid 1-butyl-3-methylimidazolium chloride were added to the flask, followed by stirring. Subsequently, the contents in the flask were filtered, thereby obtaining cellulose nanofibers. The obtained cellulose nanofibers were washed and then dispersed in distilled water, and mixed with an aqueous polyvinyl alcohol solution. The resultant was molded into a film, followed by drying. Thereby, a polyvinyl alcohol composite resin composition containing the cellulose nanofibers was obtained. The modification rate of the cellulose nanofibers obtained at this time was 0%.

(Example 2)

The cellulose nanofibers obtained in Example 1 were acetylated using acetic anhydride (esterification agent), thereby obtaining acetylated cellulose nanofibers. The modification rate of the cellulose nanofibers obtained at this time was 10%. Thereafter, polycarbonate which had already been dissolved in dichloromethane was mixed with acetylated cellulose nanofibers in the dicloromethane, followed by drying. Thereby, a polycarbonate composite resin composition

containing cellulose nanofibers was obtained.

(Example 3)

A polycarbonate composite resin composition containing cellulose nanofibers was obtained by the same process as in Example 2, except that the amount of the acetic anhydride was increased by twice that in Example 2. The modification rate of the cellulose nanofibers obtained at this time was 18%.

(Example 4)

A polycarbonate composite resin composition containing cellulose nanofibers was obtained by the same process as in Example 2, except that hexamethyldisilazane (silyl etherification agent) was added instead of acetic anhydride. The modification rate of the cellulose nanofibers obtained at this time was 15%.

(Comparative Example 1)

A polycarbonate composite resin composition containing cellulose nanofibers was obtained by the same process as in Example 2, except that bacterial cellulose obtained by drying NATA de COCO (manufactured by Fujicco Co., Ltd., average polymerization degree: 3000 or higher, average aspect ratio: 1000 or more, average diameter: 70 nm) was used.

(Comparative Example 2)

A polycarbonate composite resin composition containing cellulose nanofibers was obtained in the same process as in Example 2, except that fine crystalline cellulose (manufactured by MERCK LTD., average polymerization degree: 250, average aspect ratio: 10, diameter: crystals having a diameter of 1 $\mu$m to 10 $\mu$m are mixed) was used.
The molded bodies of the respective examples and comparative examples were measured by the following test method, and the results are shown in Table 1.

(1) Average Polymerization Degree

The average polymerization degree was measured by the copper ethylenediamine method disclosed in "The Society of Polymer Science, Japan, "Polymer material testing method 2", p.267, KYORITSU SHUPPAN CO., LTD. (1965)".

(2) Aspect Ratio and Average Diameter

The number average fiber diameter and the number average length of the cellulose nanofibers were evaluated by SEM analysis.
Specifically, a cellulose nanofiber dispersion was cast on a wafer so as to be observed by SEM, and for each of the obtained images, the values of fiber diameter and length were read out with respect to 20 or more strands of fibers. This operation was performed on at least 3 sheets of images of non-overlapping regions, thereby obtaining information on the diameter and length of a minimum of 30 strands of fiber.
From the data of the fiber diameter and length obtained as above, the number average fiber diameter and the number average length could be calculated. From a ratio between the number average length and the number average fiber diameter, the aspect ratio was calculated. When the aspect ratio was 20 to 10000, this was determined to be O, and when the aspect ratio was not 20 to 10000, this was determined to be X.

(3) Crystal Structure Analysis (XRD)

The crystal structure of the cellulose nanofibers was analyzed using a powder X-ray diffraction instrument Rigaku Ultima IV. When the X-ray diffraction pattern showed the pattern unique to the I$\beta$-type crystals , this was determined to be O. Cases other than this were determined to be $\Delta$. In addition, when the crystal structure of the cellulose nanofibers was an I$\beta$-type crystal structure in examples and comparative examples, this was indicated as O, and when the crystal structure was not the I$\beta$-type crystal structure, this was indicated as X.

(4) Modification Rate A1 of Hydroxyl Group

The modification rate of hydroxyl groups was calculated from an elemental ratio between carbon, hydrogen,

and oxygen that was obtained by elemental analysis.

(5) Saturated Absorptivity R

First, cellulose nanofibers of a weight (W1) were dispersed in dichloromethane (SP value 9.7), thereby preparing a dispersion of 2 wt%. Subsequently, this dispersion was put in a centrifuge flask, followed by centrifugation for 30 minutes at 4500 G. Thereafter, a transparent solvent layer in the upper portion of the centrifuged dispersion was removed, and then a weight (W2) of a gel layer in the lower portion was measured. From the result, the saturated absorptivity was calculated by the following formula.

$$R = W2/W1 \times 100\%$$

For Example 3, the evaluation was performed using two solvents including ethyl acetate (SP value 9.1) and dichloromethane (SP value 9.7). At this time, the amount of ethyl acetate was 1200% by mass, and the amount of dichloromethane was 1500% by mass.
When the saturated absorptivity was from 300% by mass to 5000% by mass, this was determined to be ○. When the saturated absorptivity was not from 300% by mass to 5000% by mass, this was determined to be Δ.

(6) Saturated Average Light Transmittance

A resin film having a thickness of 20 μm and containing 2 wt% of the cellulose nanofibers was prepared, and a transmittance at 600 nm was measured using UV 3600 manufactured by Shimadzu Corporation. When the cellulose nanofibers were not mixed with a resin in visual observation, this was determined to be X.

[Table 1]

| | Example 1 | Example 2 | Example 3 | Example 4 | Comparative Example 1 | Comparative Example 2 |
|---|---|---|---|---|---|---|
| Polymerization degree | 800 | 800 | 800 | 600 | 3000 | 250 |
| Aspect ratio | 106 | 100 | 95 | 103 | 1000 | 10 |
| Average diameter (nm) | 100 | 100 | 100 | 100 | 70 | 1000 |
| Crystal type | ○ | ○ | ○ | ○ | X | ○ |
| Modification rate (%) | 0 | 10 | 18 | 15 | 0 | 0 |
| Saturated absorptivity | Δ | ○ | ○ | ○ | Δ | Δ |
| XRD | ○ | ○ | ○ | ○ | Δ | ○ |
| Average light transmittance (%) | 60 | 80 | 80 | 80 | X | X |

As shown in Table 1, the molded body of the present invention was excellent in terms of the average light transmittance. Moreover, Examples 2 to 4 in which hydroxyl groups of the cellulose nanofibers of the present invention were chemically modified were superior in the saturated absorptivity, compared to Comparative Examples 1 and 2.
The molded bodies of the respective examples and comparative examples were measured by the following test method, and the results are shown in Table 2.

(1) Moldability

The obtained composite resin compositions containing cellulose nanofibers were thermally melted and molded, and the molded state was judged by visual observation. When the moldability was excellent, this was determined to be ○, and when the moldability was poor, this was determined to be X.

(2) Linear Heat Expansion Coefficient

A linear hest expansion coefficient between 100°C and 180°C was measured using Thermo plus TMA 8310

manufactured by Rigaku Corporation in an air atmosphere heated at a heating rate of 5°C/min. The size of a test sample was set to 20 mm (length)×5 mm (width). First, a first-run was carried out at a temperature ranging from room temperature to Tg, and then the temperature was cooled to room temperature to carry out a second-run. From the results, a linear heat expansion coefficient was calculated by the following formula.

$$\text{Linear heat expansion coefficient} = (\text{length at a point in time of } 180°\text{C} - \text{length at a point in time of } 40°\text{C}) / \text{length at a point in time of } 40°\text{C} \times 100 - 100$$

When the linear heat expansion coefficient was 5% or greater, this was determined to be ○. When the coefficient was less than 5%, this was determined to be X.

[Table 2]

| | Example 1 | Example 2 | Example 3 | Example 4 | Comparative Example 1 | Comparative Example 2 |
|---|---|---|---|---|---|---|
| Moldability | ○ | ○ | ○ | ○ | X | ○ |
| Linear heat expansion coefficient | ○ | ○ | ○ | ○ | ○ | X |

As shown in Table 2, the molded bodies of the present invention obtained in examples showed moldability and linear heat expansion coefficients superior to those of comparative examples.

Industrial Applicability

According to the present invention, it is possible to provide cellulose nanofibers having an excellent reinforcing effect, a method for producing the cellulose nanofibers, a composite resin composition containing the cellulose nanofibers, and a molded body obtained by molding the composite resin composition.

## Claims

**1.** Cellulose nanofibers,
wherein the cellulose nanofibers are derived from defibrated cellulose raw material selected from cotton, hemp and pulp, in a solution containing an ionic liquid and a first organic solvent,
an average polymerization degree is 600 to 30000,
an aspect ratio is 20 to 10000,
an average diameter is 1 nm to 800 nm, and
the cellulose nanofibers have an Iβ-type crystal peak in an X-ray diffraction pattern, and wherein the average polymerization degree, the aspect ratio and the average diameter are measured as disclosed in the description,
**characterized in that**
the hydroxyl groups of the cellulose nanofibers are esterified or etherified by a modification group, wherein 0.01% to 50% of the total hydroxyl groups are chemically modified by the modification group, and
a saturated absorptivity of the cellulose nanofibers in a second organic solvent having an SP value of 8 to 13 is 300% by mass to 5000% by mass.

**2.** The cellulose nanofibers according to Claim 1,
wherein the second organic solvent is a water-insoluble solvent.

**3.** A composite resin composition comprising the cellulose nanofibers according to Claim 1 or 2 in a resin.

**4.** The composite resin composition according to Claim 3,
wherein an average light transmittance at 400 nm to 700 nm is 60% or more.

**5.** A molded body obtained by molding the composite resin composition according to Claim 3 or 4.

6. A method for producing the cellulose nanofibers according to any one of Claim 1 or 2, wherein a cellulose raw material is defibrated in a treatment solution containing an ionic liquid represented by the following chemical formula in which $R_1$ represents an alkyl group having 1 to 4 carbon atoms, $R_2$ represents an alkyl group having 1 to 4 carbon atoms or an allyl group, and $X^-$ represents one of halogen pseudo-halogen, carboxylate having 1 to 4 carbon atoms, and thiocynate:

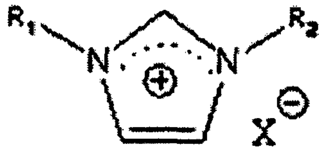

wherein the cellulose nanofibers obtained by defibrating the cellulose raw material are esterified or etherified such that a portion of hydroxyl groups chemically modified by a modification group with respect to total hydroxyl group in the cellulose nanofibers is 10% to 20%.

7. The method according to claim 6, wherein the ionic liquid includes at least one of the following materials:

1-butyl-3-methylimidazolium chloride, 1-butyl-3-methylimidazolium bromide, 1-allyl-3-methylimidazolium chloride, 1-allyl-3-methylimidazolium bromide, and 1-propyl-3-methylimidazolium bromide.

8. The method according to claim 6 or 7, wherein the first organic solvent containes at least one of the following materials:

N,N-dimethylacetamide, N,N-dimethylformamide, 1-methyl-2-pyrrolidone, dimethylsulfoxide, acetonitrile, methanol, and ethanol.

9. The method according to any one of claims 6 to 8, wherein the amount of ionic liquid contained in the treatment solution is 20% by mass or more.

10. The method according to any one of claims 6 to 9, wherein the amount of the cellulose raw material added to the treatment solution is in a range from 0.5% by mass to 30% by mass based on the treatment solution.

11. The method according to any one of claims 6 to 10, wherein the amount of the cellulose raw material added to the treatment solution is in a range from 1% by mass to 20% by mass based on the treatment solution.

## Patentansprüche

1. Zellulose-Nanofasern,
wobei die Zellulose-Nanofasern von zerfasertem Zelluloserohmaterial, das von Baumwolle, Hanf und Zellstoff ausgewählt ist, in einer Lösung, die eine ionische Flüssigkeit und ein erstes organisches Lösungsmittel enthält, abstammen, wobei
ein durchschnittlicher Polymerisationsgrad zwischen 600 und 30000 liegt,
ein Aspektverhältnis 20 bis 10000 ist,
ein durchschnittlicher Durchmesser zwischen 1 nm und 800 nm liegt, und
die Zellulose-Nanofasern einen Iß-Typ-Kristall-Peak in einem Röntgendiagramm aufweisen, und
der durchschnittliche Polymerisationsgrad, das Aspektverhältnis und der durchschnittliche Durchmesser wie in der Beschreibung dargelegt gemessen werden,
**dadurch gekennzeichnet, dass**
die Hydroxylgruppen der Zellulose-Nanofasern durch eine Modifikationsgruppe verestert oder verethert sind, wobei 0,01% bis 50% der gesamten Hydroxylgruppen chemisch durch die Modifikationsgruppe modifiziert sind, und
ein gesättigter Absorptionsgrad der Zellulose-Nanofasern in einem zweiten organischen Lösungsmittel mit einem SP-Wert von 8 bis 13 300 Gewichtsprozent bis 5000 Gewichtsprozent beträgt.

2. Zellulose-Nanofasern nach Anspruch 1, wobei das zweite organische Lösungsmittel ein nicht wasserlösliches Lösungsmittel ist.

3. Verbundharzzusammensetzung, aufweisend die Zellulose-Nanofasern nach Anspruch 1 oder 2 in einem Harz.

4. Verbundharzzusammensetzung nach Anspruch 3, wobei eine durchschnittliche Lichtdurchlässigkeit bei 400 nm bis 700 nm 60% oder mehr beträgt.

5. Geformter Körper, der durch Formen der Verbundharzzusammensetzung nach Anspruch 3 oder 4 erhalten wird.

6. Verfahren zum Herstellen der Zellulose-Nanofasern nach einem der Ansprüche 1 oder 2,
wobei ein Zelluloserohmaterial in einer Behandlungslösung zerfasert wird, die eine ionische Flüssigkeit enthält, die durch die folgende chemische Formel dargestellt wird, in der $R_1$ eine Alkylgruppe mit 1 bis 4 Kohlenstoffatomen darstellt, $R_2$ eine Alkylgruppe mit 1 bis 4 Kohlenstoffatomen oder eine Allylgruppe darstellt, und $X^-$ eines von einem Halogen-Pseudo-Halogen, Carboxylat mit 1 bis 4 Kohlenstoffatomen und Thiocynat darstellt:

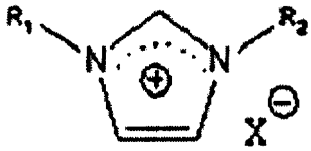

wobei die Zellulose-Nanofasern, die durch Zerfasern des Zelluloserohmaterials erhalten werden, verestert oder verethert werden, so dass ein Teil der Hydroxylgruppen, der durch eine Modifikationsgruppe chemisch modifiziert wurde, in Bezug auf die gesamte Hydroxylgruppe in den Zellulosenanofasern 10% bis 20% beträgt.

7. Verfahren nach Anspruch 6, wobei die ionische Flüssigkeit zumindest eines von den folgenden Materialien beinhaltet:

1-Butyl-3-Methylimidazoliumchlorid, 1 -Butyl-3 -Methylimidazoliumbromid, 1-Allyl-3-Methylimidazoliumchlorid, 1-Allyl-3-Methylimidazoliumbromid und 1 -Propyl-3 -Methylimidazoliumbromid.

8. Verfahren nach Anspruch 6 oder 7, wobei das erste organische Lösungsmittel zumindest eines von den folgenden Materialien beinhaltet:

N,N-Dimethylacetamid, N,N-Dimethylformamid, 1-Methyl-2-Pyrrolidon, Dimethylsulfoxid, Acetonitril, Methanol und Ethanol.

9. Verfahren nach einem der Ansprüche 6 bis 8, wobei die Menge an ionischer Flüssigkeit, die in der Behandlungslösung enthalten ist, mindestens 20 Gewichtsprozent beträgt.

10. Verfahren nach einem der Ansprüche 6 bis 9, wobei die Menge des Zelluloserohmaterials, das der Behandlungslösung beigegeben wird, zwischen 0,5 und 30 Gewichtsprozent im Verhältnis zu der Behandlungslösung liegt.

11. Verfahren nach einem der Ansprüche 6 bis 10, wobei die Menge des Zelluloserohmaterials, das der Behandlungslösung beigegeben wird, zwischen 1 und 20 Gewichtsprozent im Verhältnis zu der Behandlungslösung liegt.

## Revendications

1. Nanofibres de cellulose,
dans lesquelles les nanofibres de cellulose sont dérivées d'une matière première à base de cellulose défibrée choisie parmi le coton, le chanvre et la pâte, dans une solution contenant un liquide ionique et un premier solvant organique,
un degré moyen de polymérisation est de 600 à 30 000, un rapport d'allongement est de 20 à 10 000,
un diamètre moyen est de 1 nm à 800 nm, et
les nanofibres de cellulose ont un pic cristallin de type Iβ sur un spectre de diffraction des rayons X,
et dans lesquelles le degré moyen de polymérisation, le rapport d'allongement et le diamètre moyen sont mesurés tel que décrit dans la description,
**caractérisées en ce que** les groupes hydroxyles des nanofibres de cellulose sont estérifiés ou éthérifiés par un groupe de modification, dans lesquelles de 0,01 % à 50 % des groupes hydroxyles totaux sont chimiquement modifiés par le groupe de modification, et
un pouvoir d'absorption à saturation des nanofibres de cellulose dans un second solvant organique ayant une valeur SP de 8 à 13 est de 300 % en masse à 5 000 % en masse.

**2.** Nanofibres de cellulose selon la revendication 1,
dans lesquelles le second solvant organique est un solvant insoluble dans l'eau.

**3.** Composition de résine composite comprenant les nanofibres de cellulose selon la revendication 1 ou 2 dans une résine.

**4.** Composition de résine composite selon la revendication 3,
dans laquelle une transmittance moyenne de la lumière à 400 nm à 700 nm est de 60 % ou plus.

**5.** Objet moulé obtenu par moulage de la composition de résine composite selon la revendication 3 ou 4.

**6.** Procédé de production des nanofibres de cellulose selon une quelconque revendication 1 ou 2,
dans lequel une matière première à base de cellulose est défibrée dans une solution de traitement contenant un liquide ionique représenté par la formule chimique suivante dans laquelle $R_1$ représente un groupe alkyle comportant de 1 à 4 atomes de carbone, $R_2$ représente un groupe alkyle comportant de 1 à 4 atomes de carbone ou un groupe allyle, et $X^-$ représente l'un parmi un halogène pseudo-halogène, un carboxylate comportant de 1 à 4 atomes de carbone, et un thiocyanate :

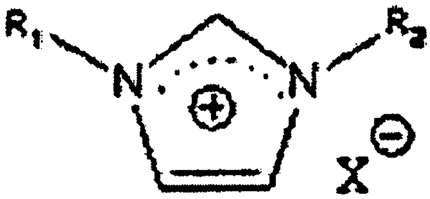

dans lequel les nanofibres de cellulose obtenues en défibrant la matière première à base de cellulose sont estérifiées ou éthérifiées de manière à ce qu'une partie des groupes hydroxyles chimiquement modifiés par un groupe de modification par rapport à un groupe hydroxyle total dans les nanofibres de cellulose soit de 10 % à 20 %.

**7.** Procédé selon la revendication 6, dans lequel le liquide ionique comprend au moins l'un des matériaux suivants :

chlorure de 1-butyl-3-méthylimidazolium, bromure de 1-butyl-3-méthylimidazolium, chlorure de 1-allyl-3-méthylimidazolium, bromure de 1-allyl-3-méthylimidazolium et bromure de 1-propyl-3-méthylimidazolium.

**8.** Procédé selon la revendication 6 ou 7, dans lequel le premier solvant organique contient au moins l'un des matériaux suivants :

N,N-diméthylacétamide, N,N-diméthylformamide, 1-méthyl-2-pyrrolidone, diméthylsulfoxyde, acétonitrile, méthanol et éthanol.

**9.** Procédé selon l'une quelconque des revendications 6 à 8, dans lequel la quantité de liquide ionique contenue dans la solution de traitement est de 20 % en masse ou plus.

**10.** Procédé selon l'une quelconque des revendications 6 à 9, dans lequel la quantité de matière première à base de cellulose ajoutée à la solution de traitement est dans une plage de 0,5 % en masse à 30 % en masse sur la base de la solution de traitement.

**11.** Procédé selon l'une quelconque des revendications 6 à 10, dans lequel la quantité de matière première à base de cellulose ajoutée à la solution de traitement est dans une plage de 1 % en masse à 20 % en masse sur la base de la solution de traitement.

FIG. 1

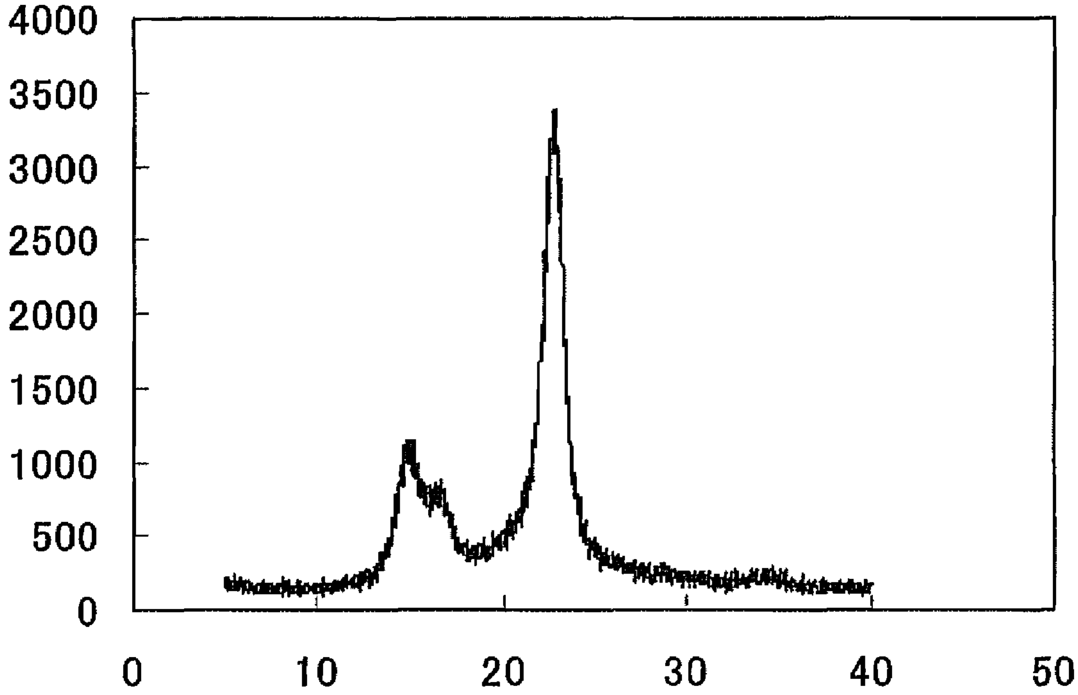

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009069641 A1
- JP 2009179913 A
- JP 2009144262 A
- JP 2000017592 A
- JP 9291102 A
- US 6703497 B1
- JP 2010104768 A


### Non-patent literature cited in the description


- The Society of Polymer Science. Polymer material testing method 2. KYORITSU SHUPPAN CO., LTD, 1965